# EUROPÄISCHE PATENTSCHRIFT

(11) **EP 1 592 898 B1**
(45) Veröffentlichungstag und Bekanntmachung des Hinweises auf die Patenterteilung: **25.10.2006**
(21) Anmeldenummer: 03789315.3
(22) Anmeldetag: 17.12.2003
(51) Int. Cl.: F16G 13/06, B65G 17/42, B65G 17/38, F16G 13/18

(54) **LASCHENKETTE MIT AUS EINZELLASCHEN AUFGEBAUTEN INNEN- BZW. AUSSENLASCHEN**
PLATE LINK CHAIN COMPRISING INNER AND OUTER PLATES CONSISTING OF INDIVIDUAL PLATES
CHAINE ARTICULEE COMPORTANT DES MAILLONS INTERNES ET EXTERNES CONSTITUES DE MAILLONS INDIVIDUELS

(30) Priorität: 11.02.2003 DE 20302130 U
(43) Veröffentlichungstag der Anmeldung: 09.11.2005
(73) Patentinhaber: Aumund-Fördererbau GmbH & Co. KG, 47495 Rheinberg (DE)
(72) Erfinder: BURKHARD, Poppeck, 47198 Duisburg (DE)
(74) Vertreter: Müller, Karl-Ernst
(86) Internationale Anmeldenummer: PCT/EP2003/014412
(87) Internationale Veröffentlichungsnummer: WO 2004/072508

(56) Entgegenhaltungen:
- DE-U- 20 302 130
- GB-A- 193 547
- GB-A- 789 665
- GB-A- 2 135 018
- US-A- 1 694 746
- PATENT ABSTRACTS OF JAPAN vol. 010, no. 040 (M-454), 18. Februar 1986 (1986-02-18) -& JP 60 191903 A (KEWPIE KK), 30. September 1985 (1985-09-30)

## Beschreibung

Die Erfindung betrifft eine Laschenkette als Förderkette, insbesondere für Plattenbänder, Becherwerke oder dergleichen Fördermittel, bestehend aus wenigstens zwei parallel zueinander angeordneten und aus einer Abfolge von Innenlaschen und Außenlaschen bestehenden Kettensträngen, wobei die Innenlaschen mit Öffnungen zur Aufnahme wenigstens einer die Innenlaschen der gegenüberliegenden Kettenstränge verbindenden Buchsen versehen sind und die Außenlaschen mit den Öffnungen der Innenlaschen fluchtende Öffnungen zur Aufnahme eines sich durch die Buchse erstreckenden und an den Außenlaschen festgelegten Kettenbolzens aufweisen, und wenigstens die einen Kettenstrang bildenden Innenlaschen mit Winkelhaltern zur Anbringung weiterer Bestandteile des Fördermittels versehen sind.

Eine Laschenkette mit den vorgenannten Merkmalen ist in der DIN-Norm 8167 wie auch in der DIN-Norm 8175 beschrieben, siehe auch JP-A-60-191903. Bei derartigen Laschenketten besteht das Problem, daß die maximale übertragbare Kettenzugbelastung von dem schwächsten Kettenelement, d. h. der Innenlasche, der Außenlasche, der Buchse oder dem Bolzen bestimmt wird. Dabei stellt erfahrungsgemäß bei den gattungsgemäßen Laschenketten die Innenlasche mit der deren Querschnitt schwächenden Bohrung zur Aufnahme der Kettenbuchse die Schwachstelle einer gattungsgemäßen Laschenkette dar. Soweit die Laschen im Rahmen der bekannten Fertigungsverfahren aus gewalztem Blech durch Stanzen, Scheren oder Lasern hergestellt werden, lassen diese Fertigungsverfahren aus wirtschaftlichen Gründen nur eine bestimmte Blechstärke zu, womit auch die maximal zulässige Zugbelastung der Laschenkette begrenzt ist. Werden höhere Kettenzugbelastungen erforderlich, werden unverhältnismäßig bearbeitungsintensive und somit teure Schmiedeketten eingesetzt.

Der Erfindung liegt daher die Aufgabe zugrunde, bei einer Laschenkette mit den gattungsgemäßen Merkmalen eine gleichmäßige Belastung aller Kettenelemente einzurichten und gegebenenfalls die zulässige Kettenzugbelastung zu erhöhen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht vor, daß die Innenlaschen der Laschenkette aus wenigstens zwei Einzellaschen zusammengesetzt sind, von denen eine Einzellasche mit dem Winkelhalter versehen ist.

Mit der Erfindung ist der Vorteil verbunden, daß die Materialstärke der Einzellaschen auf einen Wert beschränkt werden kann, der eine wirtschaftliche Fertigung ermöglicht, ohne daß dadurch die zulässige Kettenzugbelastung begrenzt wäre; die Kettenzugbelastung kann vielmehr dadurch gesteigert werden, daß zwei oder mehr, also drei oder vier oder eine in der technischen Auslegung der Laschenkette günstige Anzahl von Einzellaschen jeweils zur Bildung einer Innenlasche herangezogen werden. Da nur eine Einzellasche mit dem Winkelhalter verbunden ist, ist die Fertigung dieser Einzellasche ebenfalls erleichtert, da die Belastung der Laschenkette durch die an den Winkelhaltern angebrachten weiteren Bestandteile des Fördermittels geringer ist als die in der Kette herrschende Zugbelastung. Die erfindungsgemäße ausgeführte Kette weist somit jeweils den besten Materialausnutzungskoeffizienten auf.

Soweit nach einem Ausführungsbeispiel der Erfindung vorgesehen ist, daß die Winkelhalter einstückig mit der sie tragenden Einzellasche ausgebildet sind, wobei der Winkelhalter durch Biegen, Pressen oder ein anderes angepaßtes Fertigungsverfahren unmittelbar erzeugt wird, ist damit der besondere Vorteil verbunden, daß es nicht mehr erforderlich ist, die gesamte Dicke der entsprechenden Kettenlasche zu verformen, sondern daß der entsprechende Formvorgang auf die den Winkelhalter tragende Einzellasche mit einer begrenzten Materialstärke beschränkt ist.

Nach einem Ausführungsbeispiel der Erfindung ist vorgesehen, daß die einen Kettenstrang bildenden Innenlaschen und Außenlaschen jeweils mit einer durch eine unterschiedliche Anzahl von Einzellaschen gebildeten Gesamtstärke ausgebildet sind. Somit erlaubt in vorteilhafter Weise die Erfindung, den Innenlaschen eines Kettenstranges durch Einsatz einer größeren Anzahl von Einzellaschen gegenüber den Außenlaschen desselben Kettenstranges eine größere Materialstärke zu geben; dabei schließt es die Erfindung nicht aus, daß die im Wechsel mit den aus mehreren Einzellaschen zusammengesetzten Innenlaschen angeordneten Außenlaschen eines Kettenstranges aus einer einzigen Einzellasche bestehen.

Soweit nach einem Ausführungsbeispiel der Erfindung vorgesehen ist, daß die zum Aufbau von Innenlaschen herangezogenen Einzellaschen eine unterschiedliche Materialstärke aufweisen können, ergibt sich daraus ein größerer Freiraum hinsichtlich der Bemessung der Materialstärke der Innenlaschen bzw. der Außenlaschen. So können dünnere Einzellaschen im Wechsel mit dickeren Einzellaschen zu einer Außenlasche bzw. Innenlasche kombiniert werden.

Nach einem Ausführungsbeispiel der Erfindung ist vorgesehen, daß die Einzellaschen miteinander zu einer Innenlasche oder Außenlasche verbunden sind, wobei die Einzellaschen miteinander verklebt oder sonstwie verbunden sein können.

Es kann vorgesehen sein, daß die die beiden Kettenstränge bildenden Außenlaschen mit Winkelhaltern versehen sind.

In der Zeichnung ist ein Ausführungsbeispiel der Erfindung wiedergegeben, welches nachstehend beschrieben ist. Es zeigen:
- Fig. 1: einen Abschnitt einer Laschenkette in einer Draufsicht,
- Fig. 2: einen Schnitt nach Linie II - II in Figur 1.

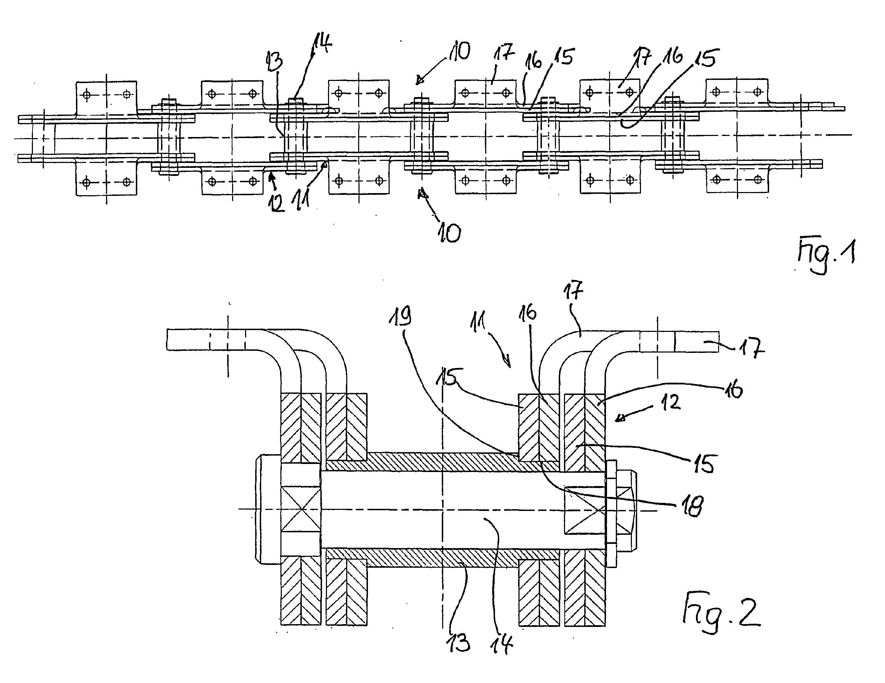

Die in Figur 1 dargestellte Laschenkette besteht aus zwei parallel zueinander geordneten Kettensträngen 10, wobei jeder Kettenstrang 10 aus einer Abfolge von Innenlaschen 11 und Außenlaschen 12 gebildet ist. Die einander gegenüberliegenden Innenlaschen 11 und Außenlaschen 12 der beiden Kettenstränge 10 sind jeweils durch die Innenlaschen 11 verbindende Buchsen 13 und in die Buchsen 13 durch zugeordnete Öffnungen der Außenlaschen 12 eingesteckte Kettenbolzen 14 miteinander verbunden.

Wie sich bereits aus Figur 1 ergibt, bestehen die Innenlaschen 11 und Außenlaschen 12 der beiden Kettenstränge 10 jeweils einheitlich aus zwei parallel zueinander angeordneten und auf die Buchsen 13 bzw. die Kettenbolzen 14 gesteckten Einzellaschen, wobei jeweils eine innere Einzellasche 15 und eine äußere Einzellasche 16 vorgesehen sind und die äußere Einzellasche 16 einstückig mit einem Winkelhalter 17 zur Anbringung weiterer Bestandteile des Fördermittels, beispielsweise zur Anbringung von Bechern bei Einsatz der Laschenkette für ein Becherwerk, ausgebildet ist.

Der Aufbau der Innenlaschen 11 bzw. der Außenlaschen 12 ist im einzelnen auch Figur 2 zu entnehmen. Zur Festlegung der Innenlaschen 11 ist die Buchse 13 an ihren äußeren Enden jeweils mit einem einen kleineren Durchmesser aufweisenden Absatz 18 versehen, der eine Schulter 19 ausbildet. Auf den Absatz 18 sind zwei Einzellaschen, und zwar eine innere Einzellasche 15 und eine einstückig mit einem Winkelhalter 17 ausgebildete Einzellasche 16, aufgeschoben derart, daß die aus den Einzellaschen 15, 16 gebildete Innenlasche 11 gegen die Schulter 19 der Buchse 13 anliegt. Entsprechend besteht die auf dem durch die Buchse 13 reichenden Kettenbolzen aufgebrachte Außenlasche 12 ebenfalls jeweils aus zwei auf den Kettenbolzen 14 aufgeschobenen Einzellaschen, und zwar wiederum aus einer Innenlasche 15 und einer einstückig mit einem Winkelhalter 17 ausgebildeten Einzellasche 16.

Die Erfindung ist nicht auf das gestellte Ausführungsbeispiel mit einem identischen Aufbau von Innen- und Außenlaschen beschränkt, vielmehr ist jeweils auch eine unterschiedliche Anzahl von Einzellaschen 15 bzw. 16 zur Bildung der Innenlasche 11 bzw. der Außenlasche 12 denkbar.

## Patentansprüche

1. Laschenkette als Förderkette, insbesondere für Plattenbänder, Becherwerke oder dergleichen Fördermittel, bestehend aus wenigstens zwei parallel zueinander angeordneten und aus einer Abfolge von Innenlaschen (11) und Außenlaschen (12) bestehenden Kettensträngen (10), wobei die Innenlaschen (11) mit Öffnungen zur Aufnahme wenigstens einer die Innenlaschen (11) der gegenüberliegenden Kettenstränge (10) verbindenden Buchsen (13) versehen sind und die Außenlaschen (12) mit den Öffnungen der Innenlaschen (11) fluchtende Öffnungen zur Aufnahme eines sich durch die Buchse (13) erstreckenden und an den Außenlaschen (12) festgelegten Kettenbolzens (14) aufweisen, und wenigstens die einen Kettenstrang (10) bildenden Innenlaschen (11) mit Winkelhaltern (17) zur Anbringung weiterer Bestandteile des Fördermittels versehen sind, **dadurch gekennzeichnet, daß** die Innenlaschen (11) der Laschenkette aus wenigstens zwei Einzellaschen (15, 16) zusammengesetzt sind, von denen eine Einzellasche (16) mit dem Winkelhalter (17) versehen ist.

2. Laschenkette nach Anspruch 1, **dadurch gekennzeichnet, daß** die Winkelhalter (17) einstückig mit der sie tragenden Einzellasche (16) ausgebildet sind.

3. Laschenkette nach Anspruch 1 oder 2, **dadurch gekennzeichnet, daß** die einen Kettenstrang (10) bildenden Innenlaschen (11) und Außenlaschen (12) jeweils mit einer durch eine unterschiedliche Anzahl von Einzellaschen (15, 16) gebildeten Gesamtstärke ausgebildet sind.

4. Laschenkette nach einem der Ansprüche 1 bis 3, **dadurch gekennzeichnet, daß** die zum Aufbau von Innenlaschen (11) herangezogenen Einzellaschen (15, 16) eine unterschiedliche Materialstärke aufweisen.

5. Laschenkette nach einem der Ansprüche 1 bis 4, **dadurch gekennzeichnet, daß** die Einzellaschen (15, 16) miteinander zu einer Innenlasche (11) verbunden sind.

6. Laschenkette nach einem der Ansprüche 1 bis 5, **dadurch gekennzeichnet, daß** die die beiden Kettenstränge (10) bildenden Innenlaschen (11) mit Winkelhaltern (17) versehen sind.

7. Laschenkette nach einem der Ansprüche 1 bis 6, **dadurch gekennzeichnet, dass** die Außenlaschen (12) der Laschenkette aus einer mit den Winkelhaltern (17) versehenen Einzellasche bestehen.

8. Laschenkette nach einem der Ansprüche 1 bis 6, **dadurch gekennzeichnet, dass** die Außenlaschen (12) der Laschenkette aus wenigstens zwei Einzellaschen (15, 16) zusammengesetzt sind, von denen eine Einzellasche (16) mit dem Winkelhalter (17) versehen ist.

## Claims

1. Plate link chain in the form of a conveyor chain, especially for platform or apron conveyors, bucket conveyors or similar conveying means, comprised of at least two chain strands (10) that are disposed parallel to one another and are comprised of a sequence of inner plate members (11) and outer plate members (12), whereby the inner plate members (11) are provided with openings for receiving at least one sleeve (13) for connecting the inner plate members (11) of the oppositely disposed chain strands (10), and the outer plate members (12) are provided with openings that are aligned with the openings of the inner plate members (11) in order to receive a link pin (14) that extends through the sleeve (13) and is fixed on the outer plate members (12), and at least the inner plate members (11) that form one chain strand (10) are provided with angle brackets (17) for the mounting of further components of the conveying means, **characterized in that** the inner plate members (11) of the plate link chain are comprised of at least two individual plates (15, 16) of which one individual plate (16) is provided with the angle bracket (17).

2. Plate link chain according to claim 1, **characterized in that** the angle bracket (17) are monolithically formed with the individual plate (16) that carries them.

3. Plate link chain according to claim 1 or 2, **characterized in that** the inner plate members (11) and outer plate members (12) that form one chain strand (10) respectively have an overall thickness formed by a different number of individual plates (15, 16).

4. Plate link chain according to one of the claims 1 to 3, **characterized in that** the individual plates (15, 16) used for the construction of inner plate members (11) have a different material thickness.

5. Plate link chain according to one of the claims 1 to 4, **characterized in that** the individual plates (15, 16) are interconnected to form an inner plate member (11)

6. Plate link chain according to one of the claims 1 to 5, **characterized in that** the inner plate members (11) that form the two chain strands (10) are provided with angle brackets (17).

7. Plate link chain according to one of the claims 1 to 6, **characterized in that** the outer plate members (12) of the plate link chain are comprised of a single individual plate that is provided with angle brackets (17).

8. Plate link chain according to one of the claims 1 to 6, **characterized in that** the outer plate members (12) of the plate link chain are comprised of at least two individual plates (15, 16) wherein one individual plate (16) of the individual plates is provided with the angle bracket (17).

## Revendications

1. Chaîne articulée formant une chaîne de convoyage, en particulier pour des convoyeurs à tabliers, des convoyeurs à godets ou autres moyens de convoyage similaires, formée par au moins deux brins de chaîne (10) agencés parallèlement l'un à l'autre et comportant une succession de maillons intérieurs (11) et de maillons extérieurs (12), les maillons intérieurs (11) étant munis d'orifices destinés à recevoir au moins une douille (13) reliant les maillons intérieurs (11) des brins de chaîne (10) face à face et les maillons extérieurs (12) comportant des orifices, alignés avec les orifices des maillons intérieurs (11) et destinés à recevoir un tourillon de chaîne (14) passant à travers la douille (13) et fixé contre les maillons extérieurs (12), et au moins les maillons intérieurs (11) formant un brin de chaîne (10) étant munis d'équerres (17) pour la fixation d'autres composants du moyen de convoyage, **caractérisée en ce que** les maillons intérieurs (11) de la chaîne articulée sont formés par au moins deux maillons individuels (15, 16), parmi lesquels un maillon individuel (16) est muni de l'équerre (17).

2. Chaîne articulée selon la revendication 1, **caractérisée en ce que** les équerres (17) sont réalisées d'un seul tenant avec le maillon individuel (16) qui les porte.

3. Chaîne articulée selon la revendication 1 ou 2, **caractérisée en ce que** les maillons intérieurs (11) et les maillons extérieurs (12) formant un brin de chaîne (10) sont réalisés chacun avec une épaisseur totale formée par un nombre différent de maillons individuels (15, 16).

4. Chaîne articulée selon l'une quelconque des revendications 1 à 3, **caractérisée en ce que** les maillons individuels (15, 16), utilisés pour la réalisation des maillons intérieurs (11), ont une épaisseur de matière différente.

5. Chaîne articulée selon l'une quelconque des revendications 1 à 4, **caractérisée en ce que** les maillons individuels (15, 16) sont assemblés entre eux pour former un maillon intérieur (11).

6. Chaîne articulée selon l'une quelconque des revendications 1 à 5, **caractérisée en ce que** les maillons intérieurs (11) formant les deux brins de chaîne (10) sont munis d'équerres (17).

7. Chaîne articulée selon l'une quelconque des revendications 1 à 6, **caractérisée en ce que** les maillons extérieurs (12) de la chaîne articulée sont formés par des maillons individuels munis d'équerres (17).

8. Chaîne articulée selon l'une quelconque des revendications 1 à 6, **caractérisée en ce que** les maillons extérieurs (12) de la chaîne articulée sont formés par au moins deux maillons individuels (15, 16), parmi lesquels un maillon individuel (16) est muni de l'équerre (17).
